# EUROPEAN PATENT APPLICATION

(11) **EP 4 067 166 A1**
(43) Date of publication of application: **05.10.2022**
(21) Application number: 20894672.3
(22) Date of filing: 27.11.2020
(51) Int. Cl.: B60N 2/75, B60K 37/00

(54) **CONSOLE BOX ASSEMBLY SLIDING SYSTEM, METHOD, AND DEVICE, AND STORAGE MEDIUM**

(30) Priority: 28.11.2019 CN 201911194178
(71) Applicant: Aiways Automobile Co., Ltd, Jiangxi 334000 (CN)
(72) Inventor: WANG, Xudong, Shangrao Jiangxi 334000 (CN)
(74) Representative: Osterhoff, Utz
(86) International application number: PCT/CN2020/132328
(87) International publication number: WO 2021/104467

(57) **Abstract**

Disclose is a system, a method, a device, and a storage medium for sliding an auxiliary console assembly, the system is applied on a vehicle with at least a first row of seats and a second row of seats, the system indues a sliding aisle at least passing through a first gap between the first row of seats and a second gap between the second row of seats in the vehicle; and an auxiliary console assembly provided in the sliding aisle and sliding along an extension direction of the sliding aisle, the auxiliary console assembly being provided with buttons for sending control commands to the vehicle. In the present application, due to the silding of the auxiliary console, passengers on the front row of seats and the rear row of seats can use the auxiliary console, it is ensured that every passenger in the vehicle can operate the in-vehicle functions without changing the in-vehicle structure and reducing a capacity of the vehicle. The auxiliary console assembly has a simple structure and is easy to be used, the user's experience is greatly improved.

## Description

### TECHNICAL FIELD

The present application relates to a field of console assemblies of vehicles, in particular to a system, a method, a device and a storage medium for sliding an auxiliary console assembly.

### BACKGROUND

The motormeters consist of various gauges, indicators, and warning light and alarms for the driver, and provide the driver with the required operating parameters of the vehicle and are provided with buttons for controlling the vehicle. A auxiliary console assembly is usually fixed between the driver's seat and the passenger's seat for controlling various functions. Because the seats of the second row is far from the seats of the front row, and a distance between the seats of the second row and the seats of the front row should be reserved as a lateral passage, an auxiliary console assembly thus cannot be provided at the seats of the second row, such that it is difficult for passengers on the seats of the second row to operate the in-vehicle functions.

In some vehicles with six or seven seats, because a distance between the seats of the second row and the seats of the third row needs to be reserved as a passage, thus, the passengers on the seats of the second row and the seats of the third row can not operate the in-vehicle functions.

Even though there are some high-grade business vehicles with a lengthened auxiliary console assembly, and the lengthened auxiliary console assembly passes through the driver's seat and the passenger's seat to reach the seats of the rear row, such arrangement will cause the seats of the rear row can only contain two passengers, which seriously reduces a capacity of the vehicle.

Therefore, the present application provides a system, a method, a device and a storage medium for sliding an auxiliary console assembly.

### SUMMARY

In order to solve the problems in the related art, the present application aims to provide a system, a method, a device and a storage medium for sliding an auxiliary console assembly, to overcome the difficulties of the related art. Due to the silding of the auxiliary console, passengers on the seats of the front row of seats and the seats of the rear row can use the auxiliary console, it is ensured that every passenger in the vehicle can operate the in-vehicle functions without changing the in-vehicle structure and reducing a personnel load of the vehicle. The auxiliary console assembly has a simple structure and is easy to be used, the user's experience is greatly improved.

In order to achieve the above purpose, the embodiment of the present application provides a system for sliding an auxiliary console assembly, applied on a vehicle with at least a first row of seats and a second row of seats, including,
a sliding aisle at least passing through a first gap in the first row of seats and a second gap in the second row of seats in the vehicle; and
an auxiliary console assembly provided in the sliding aisle and slidable along an extension direction of the sliding aisle, the auxiliary console assembly being provided with a button for sending control commands to the vehicle.

In one embodiment, the sliding aisle comprises two parallel guide rails, and the auxiliary console assembly are provided with rollers on a bottom and slidable along the parallel guide rails.

In one embodiment, the vehicle is provided with a first wireless communication module,
wherein the auxiliary console assembly further comprises a second wireless communication module wired to the buttons of the auxiliary console assembly, the second wireless communication module being communicated wirelessly with the first wireless communication module.

In one embodiment, the auxiliary console assembly comprises a first console assembly and a second console assembly, the first console assembly covering on the second console assembly, the first console assembly being fixed in a vehicle compartment, the second console assembly being provided in the sliding aisle, the first console assembly and the second console assembly being both exposed after the second console assembly is slid along the extension direction of the sliding aisle.

In one embodiment, the vehicle is provided with a first wireless communication module, and the second console assembly comprises a second wireless communication module, the second wireless communication module being wired to buttons of the second console assembly, the second wireless communication module being communicated wirelessly with the first wireless communication module.

In one embodiment, the auxiliary console assembly comprises a first console assembly and a second console assembly, the first console assembly on the second console assembly and covering side furfaces of the second console assembly, the second console assembly being fixed in the vehicle compartment, the first console assembly being provided in the sliding aisle, the first console assembly and the second console assembly being simultaneously exposed after the first console assembly is slid along the extension direction of the sliding aisle.

In one embodiment, the vehicle is provided with a first wireless communication module, the first console assembly further comprising a second wireless communication module, the second wireless communication module being wired to buttons of the first console assembly, the second wireless communication module being communicated wirelessly with the first wireless communication module.

In one embodiment, a position of the auxiliary console assembly is detected by the auxiliary console assembly, and the buttons of the auxiliary console assembly are configured to adjust parameters of in-vehicle environment devices of a current row of seats.

In one embodiment, the vehicle further includes a third row of seats;
wherein when the auxiliary console assembly is located in a first gap in the first row of seats, the buttons of the auxiliary console assembly are configured to control parameters of in-vehicle environment devices corresponding to the first row of seats;
wherein when the auxiliary console assembly is located in the second gap in the second row of seats, the buttons of the auxiliary console assembly are configured to control parameters of in-vehicle environment devices corresponding to the second row of seats; and
wherein when the auxiliary console assembly reaches the third row of seats, the buttons of the auxiliary console assembly are configured to control parameters of in-vehicle environment devices corresponding to the third row of seats.

The system for sliding an auxiliary console assembly according to claim 8 or 9, wherein the in-vehicle environment devices comprise at least one of:
air conditioner devices, heating devices, massage devices, video devices, audio devices, seating devices, and window devices.

The embodiments of the present application also provides a method for sliding an auxiliary console assembly, applied on a system for sliding an auxiliary console assembly as mentioned above, including,
sliding the auxiliary console assembly along the sliding aisle, the the button of the auxiliary console assembly being configured to adjust parameters of in-vehicle environment devices of a current row of seats;
when receiving an operation action, by the button of the auxiliary console assembly, sending, by the auxiliary console assembly, an operating command corresponding to the operation action to the in-vehicle environment devices of the current row of seats.

In one embodiment, the vehicle further comprises a third row of seats;
when the auxiliary console assembly is located in the first gap between the first row of seats, controlling, by the buttons of the auxiliary console assembly, parameters of in-vehicle environment devices corresponding to the first row of seats;
when the auxiliary console assembly is located in the second gap between the second row of seats, controlling, by the buttons of the auxiliary console assembly, parameters of in-vehicle environment devices corresponding to the second row of seats;
when the auxiliary console assembly reaches the third row of seats, controlling, by the buttons of the auxiliary console assembly, parameters of in-vehicle environment devices corresponding to the third row of seats.

The method for sliding the auxiliary console assembly according to claim 11 or 12, wherein the in-vehicle environment devices comprise at least one of:
air conditioner devices, heating devices, massage devices, video devices, audio devices, seating devices, and window devices.

The embodiments of the present application also provides a device for sliding an auxiliary console assembly, comprising,
a processor,
a memory storing executable commands of the processor;
wherein the processor is configured to execute the executable commands to execute the method for sliding the auxiliary console assembly as mentioned above.

The embodiments of the present application also provides a computer readable storage medium for storing a program, wherein the program when be executed, implements the method for sliding the auxiliary console assembly as mentioned above.

The present application aims to provide a system for sliding an auxiliary console assembly, a method, a device and a storage medium. Due to the silding of the auxiliary console, passengers on the front row of seats and the rear row of seats can use the auxiliary console, it is ensured that every passenger in the vehicle can operate the in-vehicle functions without changing the in-vehicle structure and reducing a personal load of the vehicle. The auxiliary console assembly has a simple structure and is easy to be used, the user's experience is greatly improved.

### BRIEF DESCRIPTION OF THE DRAWINGS

Other features, purposes and advantages of the present application will become more obvious through reading the detailed description of non-limiting embodiments made with reference to the following accompanying drawings.
FIG. 1 is a three-dimensional view of a first state of a first embodiment of a system for sliding an auxiliary console assembly of the present application.
FIG. 2 is a top view of the first state of the first embodiment of the system for sliding the auxiliary console assembly of the present application .
FIG. 3 is a three-dimensional view of a second state of the first embodiment of the system for sliding the auxiliary console assembly of the present application.
FIG. 4 is a top view of the second state of the first embodiment of the system for sliding the auxiliary console assembly of the present application.
FIG. 5 is a three-dimensional view of a first state of a second embodiment of the system for sliding the auxiliary console assembly of the present application.
FIG. 6 is a three-dimensional view of a second state of the second embodiment of the system for sliding the auxiliary console assembly of the present application.
FIG. 7 is a three-dimensional view of a first state of a third embodiment of the system for sliding the auxiliary console assembly of the present application.
FIG. 8 is a three-dimensional view of a second state of the third embodiment of the system for sliding the auxiliary console assembly of the present application.
FIG. 9 is a three-dimensional view of a second state of a fourth embodiment of the system for sliding the auxiliary console assembly of the present application.
FIG. 10 is a three-dimensional view of a second state of a fifth embodiment of the system for sliding the auxiliary console assembly of the present application.
FIG. 11 is a three-dimensional view of a first state of a sixth embodiment of the system for sliding the auxiliary console assembly.
FIG. 12 is a three-dimensional view of a second state of the sixth embodiment of the system for sliding the auxiliary console assembly.
FIG. 13 is a three-dimensional view of a third state of the sixth embodiment of the system for sliding the auxiliary console assembly.
FIG. 14 is a structural schematic diagram of a device for sliding the auxiliary console assembly of the present application.
FIG. 15 is a structural schematic diagram of a computer readable storage medium of an embodiment of the present application.

Labels of accompaying drawings:
- 1: a first row of seats
- 2: a second row of seats
- 3: a third row of seats
- 10: a vehicle body
- 10A: a first gap
- 10B: a second gap
- 20: an auxiliary console assembly
- 21: a button
- 22: a sliding aisle
- 23: a first wireless communication module
- 24: a second wireless communication module
- 25: a first console assembly
- 26: a second console assembly

### DETAILED DESCRIPTION OF THE EMBODIMENTS

Example embodiments will now be described more completely with reference to the accompanying drawings. However, the example embodiments can be implemented in a variety of forms and should not be understood as being limited to the embodiments set forth herein. Rather, the embodiments are provided to make the present application more comprehensive and complete, and concepts of the example embodiments will be completely understood by those skilled in the art. Identical labels in the figures indicate identical or similar structures, and thus repetitive descriptions thereof will be omitted.

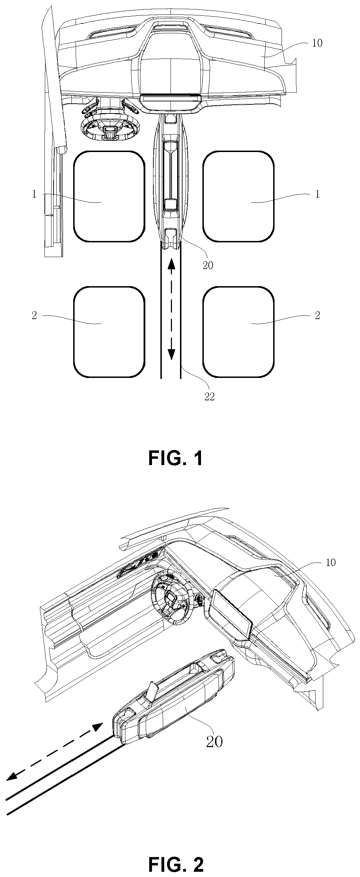

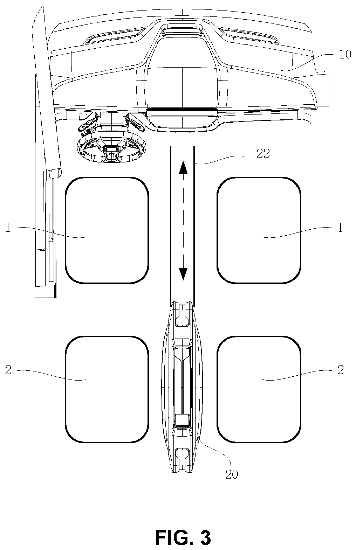

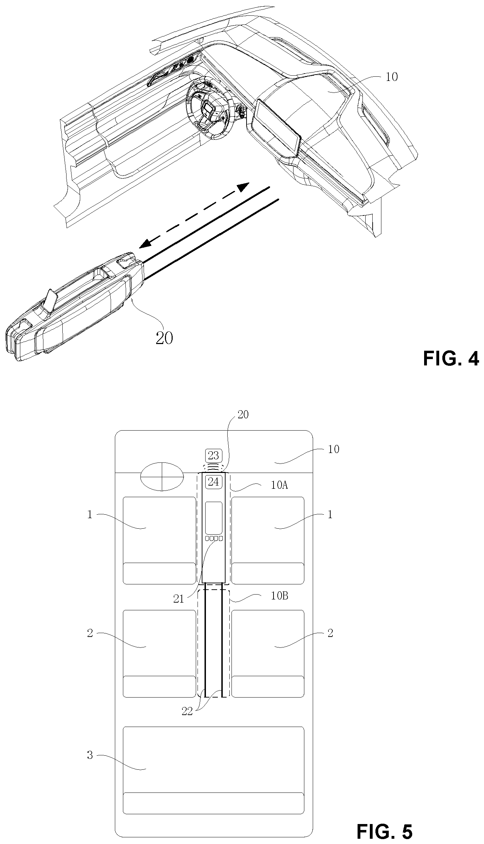

FIG. 1 is a three-dimensional view of a first state of a first embodiment of a system for sliding an auxiliary console assembly of the present application. FIG. 2 is a top view of a first state of the first embodiment of the system for sliding the auxiliary console assembly of the present application. FIG. 3 is a three-dimensional view of a second state of the first embodiment of the system for sliding the auxiliary console assembly of the present application. FIG. 4 is a top view of a second state of the first embodiment of the system for sliding the auxiliary console assembly of the present application. As shown in FIGS. 1 to 4, the system for sliding the auxiliary console assembly of the present application is applied to a vehicle. The vehicle has at least a first row of seats 1 and a second row of seats 2, and includes: a sliding aisle 22 and an auxiliary console assembly 20. The sliding aisle 22 at least passes through a first gap 10A in the first row of seats 1 and a second gap 10B in a second row of seats 2 of the vehicle. The auxiliary console assembly 20 is provided in the sliding aisle 22 and slides along an extension direction of the sliding aisle 22. The auxiliary console assembly 20 is provided with buttons 21 for sending control commands to the vehicle. In the present application, since the auxiliary console assembly 20 can slide between different rows of seats, it is ensured that every passenger in the vehicle can operate the in-vehicle functions without changing the in-vehicle structure and reducing a capacity of the vehicle. The auxiliary console assembly has a simple structure and is easy to be used, the user's experience is greatly improved. The present application aims to give a concept of mobile home is applied to an interior. The connection between passengers 4 in the vehicle is established through the slidable auxiliary console assembly, and the riding experience of the passengers on the rear row of seats is improved.

In one embodiment, the sliding aisle 22 includes two parallel guide rails, and the auxiliary console assembly 20 is provided with rollers on a bottom, and the rollers slide along the parallel guide rails,which is not be limited herein.

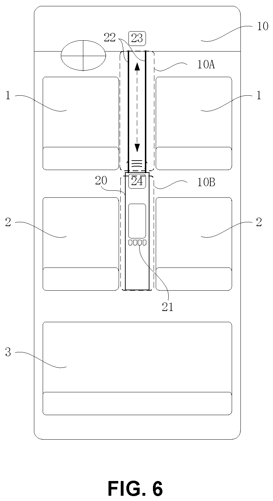

FIG. 5 is a three-dimensional view of a first state of a second embodiment of the system for sliding the auxiliary console assembly of the present application. FIG. 6 is a three-dimensional view of a second state of the second embodiment of the system for sliding the auxiliary console assembly of the present application. As shown in FIGS. 5 to 6, in one embodiment, the vehicle is provided with a first wireless communication module 23. The auxiliary console assembly 20 further includes a second wireless communication module 24. The second wireless communication module 24 is wired to buttons 21 of the auxiliary console assembly 20, and the second wireless communication module 24 is communicated wirelessly with the first wireless communication module 23. Due to the wireless communication between the vehicle and the auxiliary console assembly 20, it is avoided that the auxiliary console assembly 20 slides a longer distance and the wires is pulled and worn out, and it is ensured that the auxiliary console assembly 20 can be used for a long time.

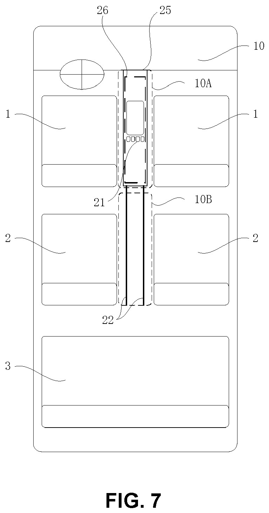

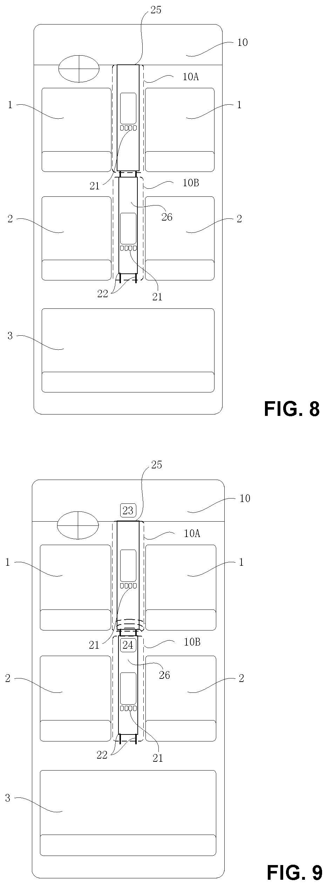

FIG. 7 is a three-dimensional view of a first state of the third embodiment of the system for sliding the auxiliary console assembly. FIG. 8 is a three-dimensional view of a second state of the third embodiment of the system for sliding the auxiliary console assembly. As shown in FIGS. 7 to 8, in one embodiment, the auxiliary console assembly 20 includes a first console assembly 25 and a second console assembly 26. A volumn of the first console assembly 25 is larger than that of the second console assembly 26. The first console assembly 25 may wrap around an outer surface of the second console assembly 26. The first console assembly 25 is covered on the second console assembly 26, and fixed in the vehicle compartment. The second console assembly 26 is provided in the sliding aisle 22, and the first console assembly 25 and the second console assembly 26 are both exposed after the second console assembly is slid along the extension direction of the sliding aisle 22. The vehicle is provided with a first wireless communication module 23. The second console assembly 26 includes a second wireless communication module 24 electrically connected to buttons 21 of the second console assembly 26 through wires. The second wireless communication module 24 is communicated wirelessly with the first wireless communication module 23. Due to the sliding travel of a part of the auxiliary console assembly 20, the users on the first row of seats 1 can always use the first console assembly 25, and the users on the second row of seats 2 can use the second console assembly 26 by sliding the second console assembly 26 to the second row of seats 2. It is ensured that the users on either the first row of seats 1 or the second row of seats 2 can use the auxiliary console assembly 20.

FIG. 9 is a three-dimensional view of a second state of a fourth embodiment of the system for sliding the auxiliary console assembly. As shown in FIG. 9, based on the third embodiment of FIGS. 7 and 8, a preferred embodiment is provided. The vehicle may be provided with a first wireless communication module 23. The auxiliary console assembly 20 includes a second wireless communication module 24. The second wireless communication module 24 is electrically connected to the buttons 21 of the auxiliary console assembly 20 through wires. The second wireless communication module 24 is communicated wirelessly with the first wireless communication module 23. Due to the wireless communication between the vehicle and the auxiliary console assembly 20, it is avoided that the auxiliary console assembly 20 slides a longer distance, and the wires are pulled and worn out cause the breakage of the wire pulled as sliding, and it is ensured that the auxiliary console assembly 20 can be used for a long time.

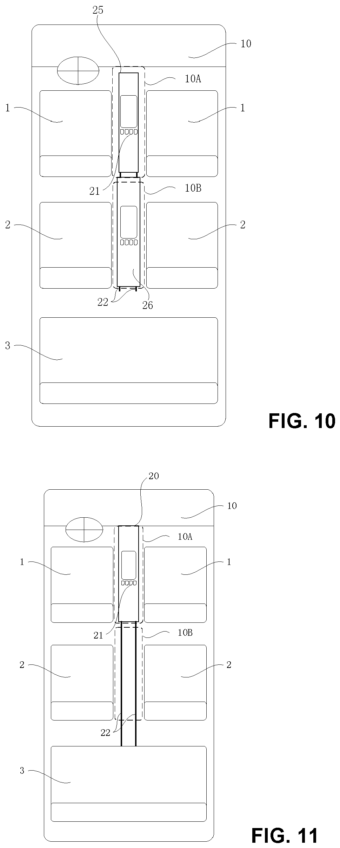

FIG. 10 is a three-dimensional view of a second state of a fifth embodiment of the system for sliding the auxiliary console assembly. As shown in FIG. 10, there is a further variation based on the third embodiment of FIGS. 7 and 8, the auxiliary console assembly 20 includes a first console assembly 25 and a second console assembly 26. A volume of the first console assembly 25 is larger than that of the second console assembly 26, and the first console assembly 25 may wrap around an outer surface of the second console assembly 26. The first console assembly 25 is covered on the second console assembly 26. The second console assembly 26 is fixed in the vehicle compartment, and the first console assembly 25 is provided in the sliding aisle 22. The first console assembly 25 and the second console assembly 26 are both exposed after the first console assembly 25 is slid along the extension direction of the sliding aisle 22. The vehicle is provided with a first wireless communication module 23, The first console assembly 25 includes a second wireless communication module 24 electrically connected to buttons 21 of the first console assembly 25. The second wireless communication module 24 is communicated wirelessly with the first wireless communication module 23. Similarly, due to the sliding travel of the partial auxiliary console assembly 20, the users on the first row of seats 1 can use the first console assembly 25 or the second console assembly 26 exposed after the first console assembly 25 is slid to the second row of seats 2. The users on the second row of seats 2 can use the first console assembly 25 by sliding the first console assembly 25 to the second row of seats 2. It is ensured that the users on either the first row of seats 1 or the second row of seats 2 can use the secondary console assembly 20.

In one embodiment, a position of the auxiliary console assembly 20 is detected and buttons 21 of the auxiliary console assembly 20 are configured to adjust parameters of in-vehicle environment devices of the current row of seats. It is preset that different positions of the auxiliary console assembly 20 on the sliding aisle 22 correspond to in-vehicle environment devices in different areas. Then which row of seats the auxiliary console assembly 20 locates is detected, the commands received by the auxiliary console assembly 20 are sent to in-vehicle environment devices corresponding to that row. For example, if it is detected that the auxiliary console assembly 20 has only one control button and this control button is for temperature of air conditioning. When the auxiliary console assembly 20 is located in the first row of seats 1, and the auxiliary console assembly 20 receives a command for adjusting the temperature to 22°, the command is sent to the air conditioning devices corresponding to the first row of seats 1 to set the temperature of air conditioning in the area of the the first row of seats 1 to 22°. Later when the auxiliary console assembly 20 is slid to the second row of seats 2, the auxiliary console assembly 20 receives a command to adjust the temperature to 25°, and the command is sent to the air conditioning devices corresponding to the second row of seats 2 to set the temperature of air conditioning in the area of the second row of seats 2 to 25°, so that the same button of the auxiliary console assembly 20 can control a plurality of in-vehicle environment devices in different areas. The in-vehicle environment devices include but are not limited to at least one of air conditioner devices, heating devices, massage devices, video devices, audio devices, seat devices and window devices.

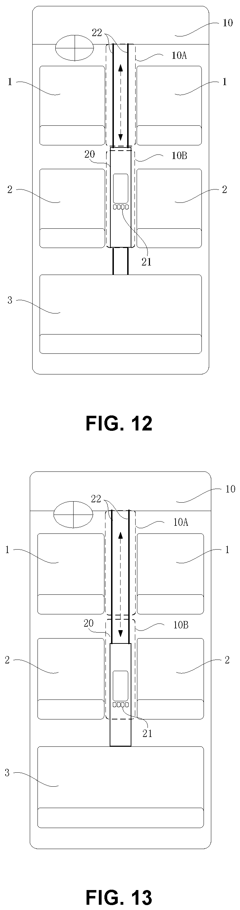

In one embodiment, the vehicle further includes a third row of seats 3. FIG. 11 is a three-dimensional view of a first state of a sixth embodiment of the system for sliding the auxiliary console assembly. When the auxiliary console assembly 20 is located in the first gap 10A in the first row of seats 1, the buttons 21 of the auxiliary console assembly 20 are configured to control parameters of the in-vehicle environment devices corresponding to the first row of seats. FIG. 12 is a three-dimensional view of a second state of the sixth embodiment of the system for sliding the auxiliary console assembly. When the auxiliary console assembly 20 is located in the second gap 10B in the second row of seats 2, the buttons 21 of the auxiliary console assembly 20 are configured to control parameters of the in-vehicle environment devices corresponding to the second row of seats. FIG. 13 is a three-dimensional view of a third state of the sixth embodiment of the system for sliding the auxiliary console assembly. When the auxiliary console assembly 20 reaches the third row of seats 3, the buttons 21 of the auxiliary console assembly 20 are configured to control parameters of in-vehicle environment devices corresponding to the third row of seats. The in-vehicle environment devices includes but are not limited to at least one of air conditioner devices, heating devices, massage devices, video devices, audio devices, seat devices and window devices.

Embodiments of the present application also provide a method for sliding an auxiliary console assembly, applied on a system for sliding an auxiliary console assembly 20 as described above, the method includes:
sliding the auxiliary console assembly 20 along the sliding aisle 22, buttons 21 of the auxiliary console assembly 20 being configured to adjust parameters of in-vehicle environment devices of a current row of seats. When the buttons 21 of the auxiliary console assembly 20 receives an operation action, the auxiliary console assembly 20 sends an operation command corresponding to the operation action to the in-vehicle environment devices of a row of seats where the auxiliary console assembly 20 is currently located. In the present application, it is preset that different positions of the auxiliary console assembly 20 on the sliding aisle 22 correspond to in-vehicle environment devices in different areas, then which row of seats the auxiliary console assembly 20 locates is detected, the commands received by the auxiliary console assembly 20 are sent to in-vehicle environment devices corresponding to that row.

In one embodiment, the vehicle further includes a third row. The use state of the present application is as follows.
(1) When it is detected that the auxiliary console assembly 20 is located at the first gap 10A in the first row of seats 1, buttons 21 of the auxiliary console assembly 20 are configured to control parameters of in-vehicle environment devices corresponding to the first row of seats. The user on the driver's seat or the passenger's seat can use the buttons 21 of the auxiliary console assembly 20 to change the parameters of the in-vehicle environment devices (e.g., air conditioner, lighting, seat massage, etc., corresponding to a range of the first row of seats) corresponding to the first row of seats, but the present application is not limited thereto.
(2) When it is detected that the secondary console assembly 20 is located in the second gap 10B in the second row of seats 2, the buttons 21 of the secondary console assembly 20 are configured to control parameters of in-vehicle environment devices corresponding to the second row of seats. The users on the second row of seats 3 may use the buttons 21 of the auxiliary console assembly 20 to change the parameters of the in-vehicle environment devices (e.g., air conditioner, lighting, seat massage, etc., corresponding to a range of the first row of seats) corresponding to the second row of seats, but the present application is not limited thereto.
(3) When it is detected that the auxiliary console assembly 20 reaches the third row of seats 3, the buttons 21 of the auxiliary console assembly 20 are configured to control parameters of in-vehicle environment devices corresponding to the third row of seats. The users on the third row of seats 3 can use the buttons 21 of the auxiliary console assembly 20 to change parameters of in-vehicle environment devices (e.g., air conditioner, lighting, seat massage, etc., corresponding to a range of the first row of seats) corresponding to the third row of seats, but the present application is not limited thereto.

The in-vehicle environment devices includes but are not limited to at least one of air conditioner devices, heating devices, massage devices, video devices, audio devices, seat devices and window devices.

In the present application, due to the sildable auxiliary console assembly, passengers on the front row of seats and the rear row of seats can use the auxiliary console, it is ensured that every passenger in the vehicle can operate the in-vehicle functions without changing the in-vehicle structure and reducing the capacity of the vehicle. The auxiliary console assembly has a simple structure and is easy to be used, the user's experience is greatly improved.

Embodiments of the present application also provide a device for sliding an auxiliary console assembly, including a processor, a memory storing executable instructions of the processor, and the processor is configured to execute the executable instructions to execute the method for sliding an auxiliary console assembly.

As shown above, in this embodiment, due to the sildable of the auxiliary console, passengers on the front row of seats and the rear row of seats can use the auxiliary console, it is ensured that every passenger in the vehicle can operate the in-vehicle functions without changing the in-vehicle structure and reducing a capacity of the vehicle. The auxiliary console assembly has a simple structure and is easy to be used, the user's experience is greatly improved.

Those skilled in the art can understand that aspects of the present application can be implemented as systems, methods or program products. As such, aspects of the present application can be realized by hardware, software (including firmware, microcode, etc.), or a combination of hardware and software, which can be collectively referred herein as a "circuit", "module" or "platform".

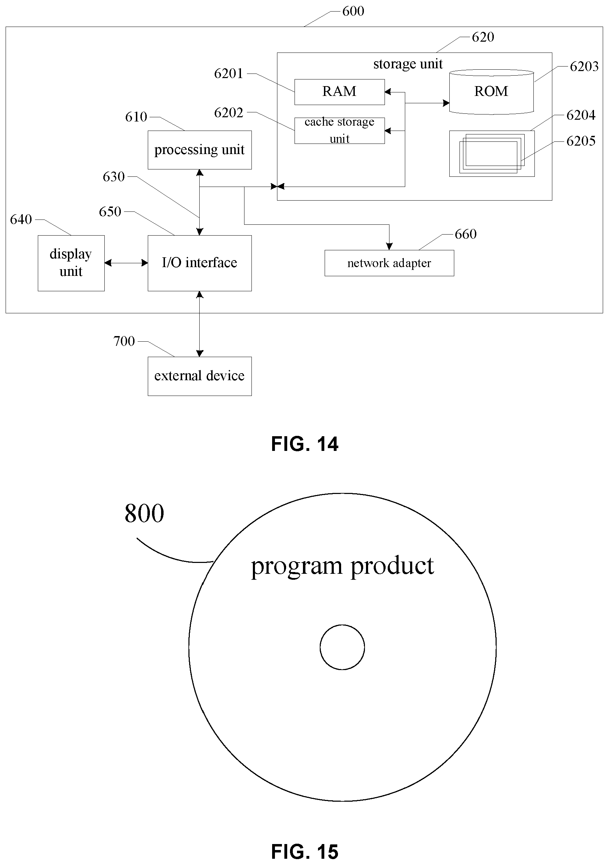

FIG. 14 is a schematic diagram of the structure of a device for sliding the auxiliary console assembly of the present application. The electronic device 600 according to this embodiment of the present application is described below with reference to FIG. 14. The electronic device 600 shown in FIG. 14 is merely an example and should not limit the function and use scope of embodiments of the present application.

As shown in FIG. 14, the electronic device 600 is represented by a general purpose computing device. The components of the electronic device 600 may include, but are not limited to, at least one processing unit 610, at least one storage unit 620, a bus 630 connected to different platform components including the storage unit 620 and the processing unit 610, a display unit 640, etc.

The storage unit stores program code, which may be executed by the processing unit 610, such that the processing unit 610 executes the operations according to various exemplary embodiments of the present application described in parts of the electronic device flow processing method above in this specification. For example, the processing unit 610 may execute the operations as shown in FIG. 1.

The storage unit 620 may include a readable medium in the form of a volatile storage unit, such as a random access storage unit (RAM) 6201 and/or a cache storage unit 6202, and may further include a read-only storage unit (ROM) 6203.

The storage unit 620 may also include a program/utility instrument 6204 with a set of (at least one) program modules 6205. Such program modules 6205 include, but are not limited to an operation system, one or more applications, other program modules, and program data, each of these examples or some combination thereof may include an implementation of a network environment.

A bus 630 may be one or more of several types of bus structures, including a storage unit bus or storage unit controller, a peripheral bus, a graphics acceleration port, a processing unit, or a local area bus using any of the plurality of bus structures.

The electronic device 600 may also communicate with one or more external devices 700 (e.g., keyboards, pointing devices, Bluetooth devices, etc.), with one or more devices that enable the user to interact with the electronic device 600, and/or with any device (e.g., routers, modems, etc.) that enables the electronic device 600 to communicate with one or more other computing devices. This communication may be via input/output (I/O) interface 650. And, the electronic device 600 may also communicate with one or more networks (e.g., local area network (LAN), wide area network (WAN), and/or public networks, such as the Internet) via the network adapter 660. The network adapter 660 may communicate with other modules of the electronic device 600 via the bus 630. It should be noted that although not shown in the figures, other hardware and/or software modules including but not limited to a microcode, device drives, redundant processing units, external disk drive arrays, redundant arrays of independent disks (RAID) systems, tape drives, and data backup storage platforms, etc., may be used in conjunction with the electronic device 600.

Embodiments of the present application also provide a computer readable storage medium for storing a program, the method for sliding an auxiliary console assembly is implemented when the program is executed. In some possible embodiments, aspects of the present application can also be implemented in the form of a program product including program codes that, when the program product is run on a terminal device, makes the terminal device to perform the operations according to various exemplary embodiments of the present application as described in parts of the electronic device flow processing method above in this specification.

As shown above, in this embodiment, due to the sildable auxiliary console assembly, passengers on the front row of seats and the rear row of seats can use the auxiliary console, it is ensured that every passenger in the vehicle can operate the in-vehicle functions without changing the in-vehicle structure and reducing a capacity of the vehicle. The auxiliary console assembly has a simple structure and is easy to be used, the user's experience is greatly improved.

FIG. 15 is a schematic diagram of the structure of the computer readable storage medium of the present application. Referring to FIG. 15, a program product 800 for implementing the above method according to an embodiment of the present application is described, the program product 800 may employ a portable compact disk read-only memory (CD-ROM) and include program codes which can run on a terminal device, such as a personal computer. However, the program product of the present application is not limited thereto, and in the present application, a readable storage medium may be any tangible medium containing or storing a program that may be used by or in combination with an command execution system, a device, or an apparatus.

The program product may employ any combination of one or more readable medium. The readable medium may be a readable signal medium or a readable storage medium. The readable storage medium may be, for example, but not limited to, an electrical, a magnetic, an optical, an electromagnetic, an infrared, or a semiconductor system, device, or apparatus, or any combination of the above. More specific examples of readable storage medium (a non-exhaustive list) include: electrical connections with one or more wires, portable disks, hard disks, a random access memory (RAM), a read-only memory (ROM), an erasable programmable read-only memory (EPROM or flash memory), an optical fiber, a portable compact disk read-only memory (CD-ROM), optical storage devices, magnetic memory devices, or any suitable combination of the above.

A computer readable storage medium may include data signals propagated in the baseband or as part of a carrier wave, the data signals carry readable program codes. This propagated data signal can be in any of a variety of forms, including, but not limited to, an electromagnetic signal, an optical signals, or any suitable combination of the above. The readable storage medium may also be any readable medium other than a readable storage medium. The readable medium can send, propagate, or transmit a program for use by or in combination with a command execution system, a device, or an apparatus. The program code contained on the readable storage medium may be transmitted by using any suitable medium, including but not limited to wireless, wired, optical, RF, etc., or any suitable combination of the above.

The program code for performing the operations of the present application may be written in any combination of one or more programming languages, including object-oriented programming languages, such as Java, C++, etc., and also including conventional procedural programming languages, such as "C" language or similar programming languages. The program code may be executed entirely on the user computing device, partially on the user device, as a stand-alone package, partially on the user computing device and partially on the remote computing device, or entirely on the remote computing device or a server. In a case of involving a remote computing device, the remote computing device may be connected to the user computing device via any kind of network, including a local area network (LAN) or a wide area network (WAN), or, may be connected to an external computing device (e.g., using an Internet service provider to connect via the Internet).

In summary, the purpose of the present application aims to provide a system for sliding an auxiliary console assembly, a method, a device and storage medium. Due to the sildable auxiliary console, passengers on the front row of seats and the rear row of seats can use the auxiliary console, it is ensured that every passenger in the vehicle can operate the in-vehicle functions without changing the in-vehicle structure and reducing a capacity of the vehicle. The auxiliary console assembly has a simple structure and is easy to be used, the user's experience is greatly improved.

The above is a further detailed description of the present application in conjunction with specific embodiments, and it cannot be considered that the specific embodiment of the present application is limited to these descriptions. For a person of ordinary skill in the technical field to which the present application belongs, without departing from the concept of the present application, a number of simple derivations or replacements can be made, all of which should be considered as belonging to the claimed scope of the present application.

## Claims

1. A system for sliding an auxiliary console assembly, applied on a vehicle with at least a first row of seats and a second row of seats, comprising:
a sliding aisle at least passing through a first gap in the first row of seats and a second gap in the second row of seats in the vehicle; and
an auxiliary console assembly provided in the sliding aisle and slidable along an extension direction of the sliding aisle, the auxiliary console assembly being provided with a button for sending control commands to the vehicle.

2. The system for sliding the auxiliary console assembly according to claim 1, wherein the sliding aisle comprises two parallel guide rails, and the auxiliary console assembly are provided with rollers on a bottom and slidable along the parallel guide rails.

3. The system for sliding the auxiliary console assembly according to claim 1, wherein the vehicle is provided with a first wireless communication module,
wherein the auxiliary console assembly further comprises a second wireless communication module wired to the buttons of the auxiliary console assembly, the second wireless communication module being communicated wirelessly with the first wireless communication module.

4. The system for sliding the auxiliary console assembly according to claim 1, wherein the auxiliary console assembly comprises a first console assembly and a second console assembly, the first console assembly covering on the second console assembly, the first console assembly being fixed in a vehicle compartment, the second console assembly being provided in the sliding aisle, the first console assembly and the second console assembly being both exposed after the second console assembly is slid along the extension direction of the sliding aisle.

5. The system for sliding the auxiliary console assembly according to claim 4, wherein the vehicle is provided with a first wireless communication module, and the second console assembly comprises a second wireless communication module, the second wireless communication module being wired to buttons of the second console assembly, the second wireless communication module being communicated wirelessly with the first wireless communication module.

6. The system for sliding the auxiliary console assembly according to claim 1, wherein the auxiliary console assembly comprises a first console assembly and a second console assembly, the first console assembly being covered over the second console assembly, the second console assembly being fixed in the vehicle compartment, the first console assembly being provided in the sliding aisle, the first console assembly and the second console assembly being simultaneously exposed after the first console assembly is slid along the extension direction of the sliding aisle.

7. The system for sliding the auxiliary console assembly according to claim 6, wherein the vehicle is provided with a first wireless communication module, the first console assembly further comprising a second wireless communication module, the second wireless communication module being wired to buttons of the first console assembly, the second wireless communication module being communicated wirelessly with the first wireless communication module.

8. The system for sliding the auxiliary console assembly according to claim 6, wherein a position of the auxiliary console assembly is detected by the auxiliary console assembly, and the buttons of the auxiliary console assembly are configured to adjust parameters of in-vehicle environment devices of a current row of seats.

9. The system for sliding the auxiliary console assembly according to claim 6, wherein the vehicle further comprises a third row of seats;
wherein when the auxiliary console assembly is located in a first gap in the first row of seats, the buttons of the auxiliary console assembly are configured to control parameters of in-vehicle environment devices corresponding to the first row of seats;
wherein when the auxiliary console assembly is located in the second gap in the second row of seats, the buttons of the auxiliary console assembly are configured to control parameters of in-vehicle environment devices corresponding to the second row of seats; and
wherein when the auxiliary console assembly reaches the third row of seats, the buttons of the auxiliary console assembly are configured to control parameters of in-vehicle environment devices corresponding to the third row of seats.

10. The system for sliding the auxiliary console assembly according to claim 8 or 9, wherein the in-vehicle environment devices comprise at least one of:
air conditioner devices, heating devices, massage devices, video devices, audio devices, seating devices, and window devices.

11. A method for sliding the auxiliary console assembly, applied on the system for sliding the auxiliary console assembly according to claim 1, comprising,
sliding the auxiliary console assembly along the sliding aisle, the the button of the auxiliary console assembly being configured to adjust parameters of in-vehicle environment devices of a current row of seats;
when receiving an operation action, by the button of the auxiliary console assembly, sending, by the auxiliary console assembly, an operating command corresponding to the operation action to the in-vehicle environment devices of the current row of seats.

12. The method for sliding the auxiliary console assembly according to claim 11, wherein the vehicle further comprises a third row of seats;
when the auxiliary console assembly is located in the first gap between the first row of seats, controlling, by the buttons of the auxiliary console assembly, parameters of in-vehicle environment devices corresponding to the first row of seats;
when the auxiliary console assembly is located in the second gap between the second row of seats, controlling, by the buttons of the auxiliary console assembly, parameters of in-vehicle environment devices corresponding to the second row of seats;
when the auxiliary console assembly reaches the third row of seats, controlling, by the buttons of the auxiliary console assembly, parameters of in-vehicle environment devices corresponding to the third row of seats.

13. The method for sliding the auxiliary console assembly according to claim 11 or 12, wherein the in-vehicle environment devices comprise at least one of: air conditioner devices, heating devices, massage devices, video devices, audio devices, seating devices, and window devices.

14. A device for sliding an auxiliary console assembly, comprising:
a processor,
a memory storing executable instructions of the processor;
wherein the processor is configured to execute the executable instructions to execute the method for sliding the auxiliary console assembly according to any one of claims 11 to 13.

15. A computer readable storage medium for storing a program, wherein the program, when be executed, implements the method for sliding the auxiliary console assembly according to any one of claims 11 to 13.
